# EUROPEAN PATENT SPECIFICATION

(11) **EP 0 698 192 B1**
(45) Date of publication and mention of the grant of the patent: **04.12.1996**
(21) Application number: 94913047.0
(22) Date of filing: 19.04.1994
(51) Int. Cl.: F16L 37/06, F16L 13/14

(54) **A PIPE COUPLING AND A METHOD OF USING IT**
ROHRKUPPLUNG UND VERFAHREN ZU IHRER VERWENDUNG
RACCORD DE TUYAU ET PROCEDE D'UTILISATION

(30) Priority: 19.04.1993 DK 437/93
(43) Date of publication of application: 28.02.1996
(73) Proprietor: LINDHARDT, Ole, DK-3200 Helsinge (DK)
(72) Inventor: LINDHARDT, Ole, DK-3200 Helsinge (DK)
(74) Representative: Wittrup, Flemming
(86) International application number: DK9400156
(87) International publication number: WO9424475

(56) References cited:
- EP-A- 0 122 099
- EP-A- 0 338 164
- DE-A- 3 407 467
- FR-A- 2 622 272
- SE-B- 425 515

## Description

This invention concerns pipe couplings of the type stated in the introductory portion of claim 1 as well as a method of fixing a pipe end by using such a pipe coupling.

These pipe couplings are used for many purposes, e.g. in connection with plumbing installations where one or more pipes are to be pieced together in a manner so as to form a distribution network for water.

Pipes for such purposes frequently consist entirely of metal or plastics, but, in addition to these, use is increasingly made of pipes which are composed in a stratified manner of metal and plastics as well as of different plastics materials, utilizing the mechanical properties and good oxygen diffusion tightness of the metal as well as the corrosion preventing properties of the plastics, and a good oxygen diffusion tightness with respect to some plastics materials. These types of pipes are produced in large amounts and are cut to suitable lengths for the application concerned.

Known pipe couplings for joining such pipes must therefore necessarily be provided with parts for fixing the pipe ends. These fixing parts are adapted to be deformed so as to provide either a frictional connection between the pipe end and the pipe coupling or a geometric locking of the pipe end in the pipe coupling. In the latter situation, the actual pipe end will inevitably be deformed.

All of these known pipe couplings require the use of either an expensive special tool or at least two ordinary hand tools.

In addition, in the use of known pipe couplings, the walls of the pipe end are subjected to inexpedient torsional forces or columnar forces seen in relation to the longitudinal axis of the pipe, which, in particular in connection with plastics pipes and stratified pipes, may cause unintentional crack formation in the pipe and delamination in the stratified pipes, resulting in leakages.

A pipe coupling is moreover known from FR-A1-2 622 272, comprising an element having an interior, annular chamber. When the chamber is filled with a fluid under pressure, the element is pressed against the internal or external surface of a pipe to ensure a tight connection. However, this coupling requires that the fluid under pressure is supplied from an external source. If a pipe end which has just been cut from a pipe length without other subsequent treatment is used in this coupling, the pipe end will only be retained in the pipe coupling by friction. This is obviated in FR-A1-2 622 272 by using a pipe end having a bead. Thus, this as well as the said external source of fluid under pressure requires the use of special tools which are normally not available at e.g. a building site, or when the installation is made by private persons.

From EP-A-0 122 099 and EP-A-0 338 164 it is known to press a pipe into a profile by hydrostatic pressure. However, also these couplings need the use of special tools, which are normally not available.

The object of this invention is therefore to provide a pipe coupling which does not require the use of special tools or several hand tools, and which does not subject the pipe end to the above-mentioned inexpedient torsional or columnar forces.

This is obtained by the pipe coupling according to claim 1 and by the method according to claim 8. It is ensured in this manner that the pressure of the membrane against the wall of the pipe end substantially affects it by a radial force, thereby retaining the pipe end without subjecting the wall of the pipe to torsional or columnar forces.

Further, the joint thus achieved can resist very great water pressures, which may e.g. occur by the so-called water hammer effect, since the pipe end is deformed plastically and is retained in a profiled means. In addition, it is possible, by simple means, to establish the necessary hydrostatic pressure, which renders the use of several hand tools or special tools superfluous.

When the second cavity is provided as stated in claims 3 and 4, the necessary fluid pressure may be established solely by means of a pair of tongs, a screwdriver, a small adjustable spanner, a hexagon spanner or the like.

The subject-matter defined in claim 5 makes it possible to ensure maximum deformation of the diaphragm and to protect the thread of the screw against stripping, and also makes it possible always to tighten the diaphragm with a well-defined pressure.

The use of a hardening fluid in the pipe coupling, as stated in claim 6, ensures that the fixing of the pipe coupling will be permanent, which results in improved protection against leakage.

Claim 7 defines a special method of obtaining the necessary fluid pressure, viz. by chemical expansion in a closed space. This makes it possible to control the pressure impact on the diaphragm in a simple manner by simple dosing of the chemical substances which take active part in the expansion process.

The method of claim 9 ensures that the pipe is retained, even if the fluid pressure on the diaphragm should drop. It is additionally ensured that the pipe joint is difficult to disassemble following assembly.

The method defined in claim 10 makes it possible to use the pipe coupling again following removal of a pipe joint.

Embodiments of the invention will be described more fully below with reference to the drawings, in which:
fig. 1 is a sectional view of the fixing parts to receive a single pipe end in a pipe coupling,
fig. 2 is a sectional view similar to fig. 1, but with an inserted pipe end,
fig. 3 is a sectional view similar to fig. 2, but with a deformed diaphragm,
fig. 4 is a sectional view of a straight-through joint according to the invention adapted to fix two pipe ends,
fig. 5 shows a T-member according to the invention adapted to fix three pipe ends, and
fig. 6 is a sectional view of an embodiment according to the invention in which the diaphragm is positioned on the stub at the inner side of the pipe.

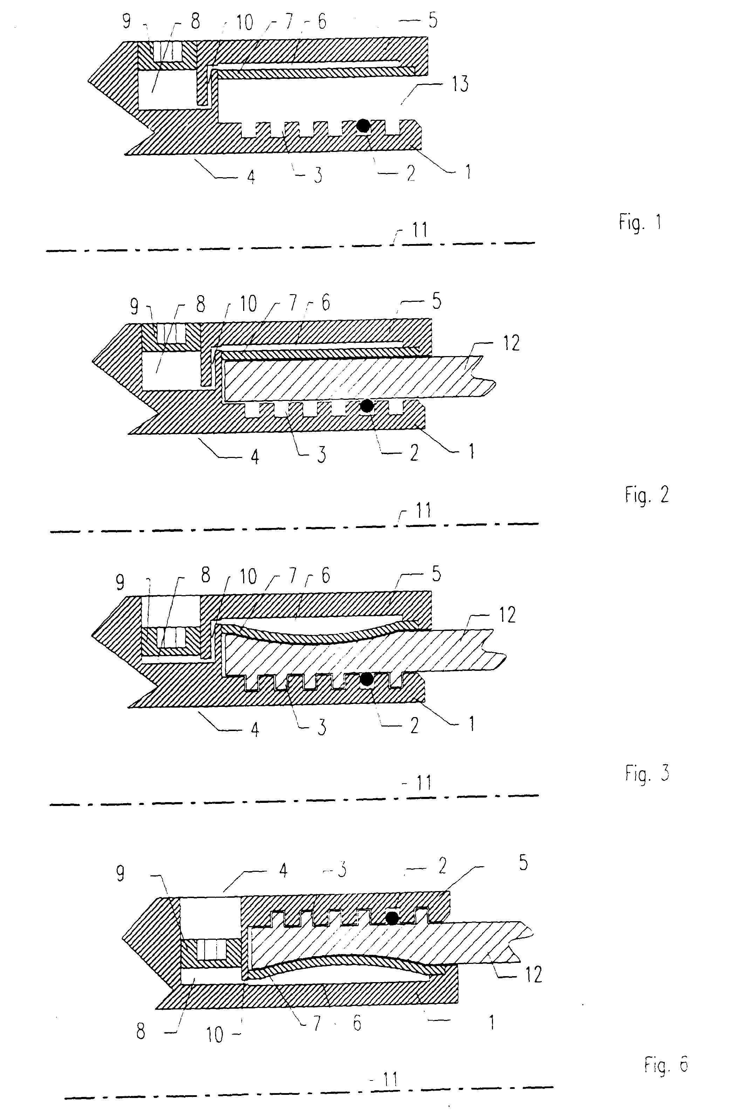

A pipe coupling may be provided with a number, at least one, of attachments for the coupling of pipes which are fixed in the pipe end by fixing means which are integrated in the pipe coupling. Fig. 1 thus shows a section of a single attachment in a pipe coupling according to the invention to fix a circular pipe. The fixing means are formed by a circular stub 1 extending around the line of symmetry 11 and having a through hole 4, said stub 1 being provided on its outer side with one or more recesses 3 which can optionally accommodate a sealing ring 2.

In addition, the fixing means are formed by a sleeve 5 whose inner side is provided with a diaphragm 7, which, in combination, define a cavity 6 communicating with a second cavity 8 via ducts 10. The cavity 8 is formed by a threaded hole, which is closed by means of a screw 9. The cavities 6, 8 and the ducts 10 are filled with a liquid.

The fixing parts hereby define a circular depression 13 in which the wall 12 of a pipe end can be located, as shown in fig. 2. In this situation, the seal 2 serves to retain the pipe end temporarily.

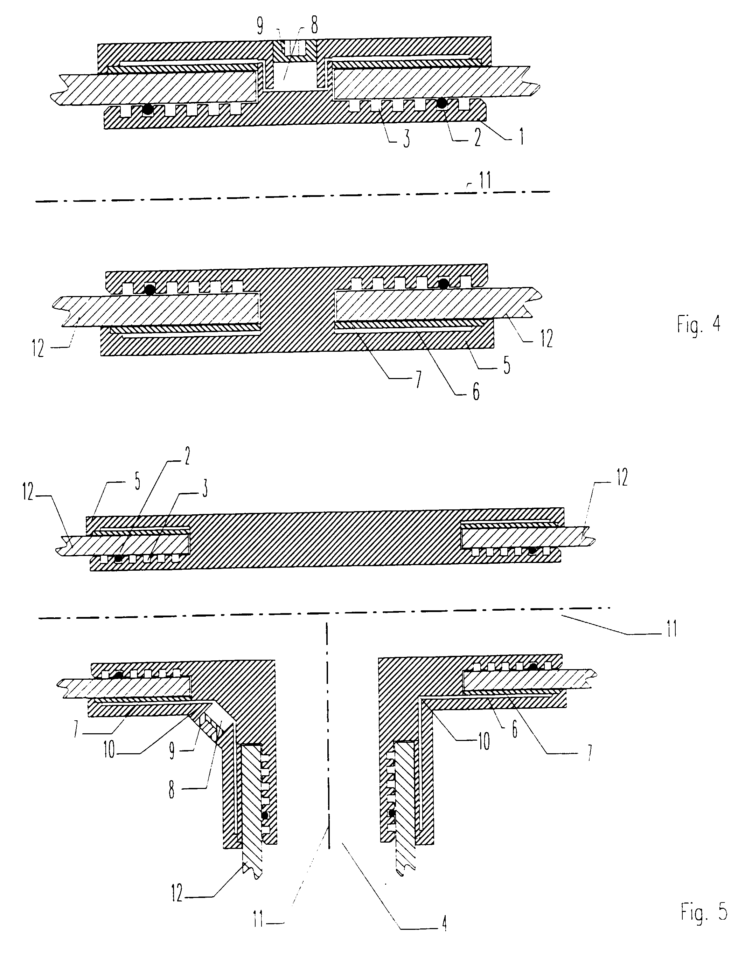

Fig. 3 then shows the joint of the pipe coupling and the pipe end 12 following tightening of the fixing parts. Tightening of the screw 9 reduces the volume of the second cavity 8 so that the contained liquid is pressed at a high pressure into the cavity 6 via the ducts 10, causing the diaphragm to be deformed to firmly engage the wall 12 of the pipe end. The engagement pressure exerted by the diaphragm on the wall 12 of the pipe end may e.g. be so great, as shown in the drawing, that the wall 12 of the pipe end is deformed into the recesses 3, resulting in geometric locking, or the pressure may be so small that the wall of the pipe end is not deformed, but sufficient for the friction between the coupling parts and the pipe end to ensure that the pipe is fixed in use.

This may be ensured e.g. in that the threads of the threaded hole have a predetermined depth, which means that the diaphragm can just be deformed to a predetermined level. It moreover means that the diaphragm can be tightened with a well-defined pressure.

As will be seen from the foregoing, the fixing process just requires tightening of the screw 9 after the pipe end 12 has been positioned in the depression 13, so that just a simple hand tool is necessary for the entire fixing process, e.g. a hexagon spanner. It will moreover be seen that the fixing solely involves a radial pressure on the wall 12 of the pipe end, thereby obviating application of inexpedient torsional and columnar forces to it, which would e.g. result in unintentional mechanical deformation.

It is clear that the necessary hydraulic pressure to provide the deformation of the diaphragm 7 may be established by other means than the threaded hole with the screw shown in figs. 1, 2 and 3. The screw may e.g. be replaced by a smooth hole which accommodates a frictional piston instead of a screw, said frictional piston being pushed in by means of a simple pair of tongs.

The hydraulic pressure may also be established utilizing chemical expansion, said cavity 8 being provided with a substance that can be activated to expand chemically. This expansion may be activated outside the pipe coupling. The chemical expansion may e.g. be obtained by means of a small explosive charge positioned in the cavity 8, and the activation of this explosive charge may e.g. be made in a known manner via an ignition pin positioned in the screw 9. It is hereby possible in practice to dimension the size of the explosive charge for the purpose concerned.

Alternatively, the screw 9 may be replaced by a nozzle, to which the mouth of e.g. a nail gun may be positioned. The necessary pressure is hereby supplied in a simple manner by firing the explosive charge of the nail gun into the nozzle.

Fig. 4 and fig. 5 show pipe couplings according to the invention, a straight-through joint for joining two pipes in extension of each other and a T-member for joining three pipes at a mutual angle of 90°, respectively. As will be seen from these figures, the cavities 6 behind the diaphragms 7 are in communication with each other, making it possible to fix all the pipes in the pipe couplings simultaneously by tightening the screw 9. This can be done in principle with any embodiment of the pipe coupling.

Fig. 6 shows an embodiment of the invention in which the diaphragm is positioned on the outer side of the stub facing the wall of the pipe end, the recesses 3 being located on the inner side of the sleeve 5 in this situation.

As will appear from the above, various media may be used for establishing the hydrostatic pressure. In certain cases requiring a specially safe joint, it may be expedient, however, to utilize a liquid as a pressure medium that can be activated to harden following tightening of the pipe coupling. Such a liquid may e.g. be formed by a liquid epoxy which has been filled with small glass beads containing a hardener, said glass beads being caused to burst by tightening of the coupling and the consequent pressure increase, whereby the epoxy hardens.

## Claims

1. A pipe coupling having means to fix at least a pipe end, said fixing means comprising a stub (1) and a sleeve (5) extending radially outside it at a distance so as to form between these an annular depression (13) in which the pipe end (12) may be positioned, said fixing means additionally comprising at least one diaphragm (7) having its one side facing the wall of the pipe end and its other side facing a cavity (6) to which a fluid under pressure may be supplied with a view to pressing the diaphragm (7) substantially radially against the wall (12) of the pipe end, **characterized** in that the cavity (6) communicates with a second, fluid-filled, closed cavity (8) which is located in the pipe coupling and wherein a hydrostatic pressure in the fluid can be established, and that at least part of the surface of the annular depression (13) is provided with a profiling means (3) with a view to pressing parts of the surface radially into the material of the pipe wall.

2. A pipe coupling according to claim 1, **characterized** in that the profiled means is in the form of one or more annular recesses (3).

3. A pipe coupling according to claim 1 or 2, **characterized** in that the second, fluid-filled, closed cavity (8) has a wall capable of being displaced with a view to establishing said hydrostatic pressure in the fluid.

4. A pipe coupling according to one of claims 1-3, **characterized** in that the second cavity (8) is formed by a threaded hole on the outer side of the pipe coupling and a screw (9) for screwing into it.

5. A pipe coupling according to claim 4, **characterized** in that the threads of the threaded hole have a predetermined depth in the hole.

6. A pipe coupling according to one of claims 1-5, **characterized** in that the fluid is of a type which hardens because of the pressure impact.

7. A pipe coupling according to claim 1 or 2, **characterized** in that the second cavity (8) accommodates a substance of a type which can be activated to expand by a chemical expansion, and means to activate it by affecting the outer side of the pipe coupling.

8. A method of fixing the wall (12) of a pipe end in a pipe coupling according to one of claims 1-7, said pipe end being introduced between a stub (1) and a sleeve (5) extending radially outside it, **characterized** by deforming the diaphragm (7) to firmly engage the wall (12) of the pipe end so that a profiled means on the stub (1) or the sleeve (5) is pressed radially into the material of the pipe wall, a fluid pressure being established in the cavity (6) on the side of the diaphragm facing away from the wall of the pipe end by establishing a hydrostatic pressure in a second, fluid-filled, closed cavity (8) located in the pipe coupling, and maintaining the deformation of the diaphragm.

9. A method according to claim 8, **characterized** by plastically deforming the diaphragm (7).

10. A method according to claim 8, **characterized** by elastically deforming the diaphragm (7), and by maintaining the fluid pressure in the cavity (6).

## Patentansprüche

1. Rohrkupplung mit einer Einrichtung zum Fixieren zumindest eines Rohrendes, wobei die Fixiereinrichtung einen Stummel (1) und eine Hülse (5) aufweist, die sich radial außerhalb davon in einem Abstand erstreckt, um dazwischen eine ringförmige Vertiefung (13) zu bilden, in der das Rohrende (12) positionierbar ist, wobei die Fixiereinrichtung zusätzlich zumindest eine Membran (7) aufweist, deren eine Seite der Wand des Rohrendes gegenüberliegt und deren andere Seite einer Aushöhlung (6) gegenüberliegt, in die druckbeaufschlagtes Fluid mit der Absicht zuführbar ist, daß die Membran (7) im wesentlichen radial gegen die Wand (12) des Rohrendes gedrückt wird, **dadurch gekennzeichnet, daß** die Aushöhlung (6) mit einer zweiten, mit Fluid gefüllten, geschlossenen Aushöhlung (8) in Verbindung steht, die in der Rohrkupplung angeordnet ist, und wobei ein hydrostatischer Druck im Fluid verwirklichbar ist, und daß zumindest ein Teil der Fläche der ringförmigen Vertiefung (13) mit einer Profileinrichtung (3) mit der Absicht vorgesehen ist, daß Teile der Oberfläche radial in das Material der Rohrwand gedrückt werden.

2. Rohrkupplung nach Anspruch 1, **dadurch gekennzeichnet,** daß die Profileinrichtung in der Form von einer oder mehreren ringförmigen Ausnehmungen (3) ist.

3. Rohrkupplung nach Anspruch 1 oder 2, **dadurch gekennzeichnet**, daß die zweite, mit Fluid gefüllte, geschlossene Aushöhlung (8) eine Wand hat, die mit der 5 Absicht versetzbar ist, den hydrostatischen Druck in dem Fluid zu verwirklichen.

4. Rohrkupplung nach einem der Ansprüche 1-3, **dadurch gekennzeichnet**, daß die zweite Aushöhlung (8) durch ein mit einem Gewinde versehenes Loch an der Außenseite der Rohrkupplung ausgebildet ist, und daß eine Schraube (9) darin einschraubbar ist.

5. Rohrkupplung nach Anspruch 4, **dadurch gekennzeichnet,** daß die Gewindesteigungen des mit dem Gewinde versehenen Lochs eine vorbestimmte Tiefe in dem Loch haben.

6. Rohrkupplung nach einem der Ansprüche 1-5, **dadurch gekennzeichnet**, daß das Fluid von einer Art ist, die sich aufgrund des Druckstoßes verhärtet.

7. Rohrkupplung nach Anspruch 1 oder 2, **dadurch gekennzeichnet,** daß in der zweiten Aushöhlung (8) eine Substanz einer Art untergebracht ist, die aktivierbar ist, um sich durch eine chemische Ausweitung aufzuweiten, und daß eine Einrichtung zu deren Aktivierung durch Einwirken auf die Außenseite der Rohrkupplung vorgesehen ist.

8. Verfahren zum Fixieren der Wand (12) eines Rohrendes in einer Rohrkupplung gemäß einem der Ansprüche 1-7, wobei das Rohrende zwischen einen Stummel (1) und eine Hülse (5) eingefügt ist, die sich radial außerhalb davon erstreckt, **gekennzeichnet durch** Verformen der Membran (7), um mit der Wand (12) des Rohrendes fest in Eingriff zu treten, so daß eine Profileinrichtung auf dem Stummel (1) oder der Hülse (5) radial in das Material der Rohrwand gedrückt wird, wobei ein Fluiddruck in der Aushöhlung (6) auf der Seite der Membran verwirklicht wird, die von der Wand des Rohrendes abgewandt ist, indem ein hydrostatischer Druck in einer zweiten, mit Fluid gefüllten, geschlossen Aushöhlung (8) verwirklicht wird, die in der Rohrkupplung angeordnet ist, und durch Aufrechterhalten der Verformung der Membran.

9. Verfahren nach Anspruch 8, **gekennzeichnet durch** plastisches Verformen der Membran (7).

10. Verfahren nach Anspruch 8, **gekennzeichnet durch** elastisches Verformen der Membran (7) und durch Aufrechterhalten des Fluiddrucks in der Aushöhlung (6).

## Revendications

1. Raccord de tuyau comportant des moyens pour fixer au moins une extrémité de tuyau, lesdits moyens de fixation comprenant un ergot (1) et un manchon (5) s'étendant radialement à l'extérieur de lui sur une distance telle qu'il se forme une dépression annulaire (13) entre eux, dans laquelle l'extrémité de tuyau (12) peut être positionnée, lesdits moyens de fixation comprenant en outre un diaphragme (7) ayant l'un de ses côtés faisant face à la paroi de l'extrémité du tuyau et son autre côté en regard d'une cavité vers laquelle un fluide sous pression peut être délivré en vue d'exercer une pression sur la diaphragme (7), sensiblement radialement contre la paroi (12) de l'extrémité du tuyau, caractérisé en ce que la cavité (6) communique avec une seconde cavité fermée, remplie de fluide (8) qui est située dans le raccord de tuyau et dans laquelle peut être établie une pression hydrostatique dans le fluide et en ce que au moins une partie de la surface de la dépression annulaire (13) est munie de moyens de profilage (3) en vue d'exercer une pression sur des parties de la surface, radialement dans le matériau de la paroi du tuyau.

2. Raccord de tuyau selon la revendication 1, caractérisé en ce que les moyens profilés présentent la forme d'un ou de plusieurs évidements annulaires (3).

3. Raccord de tuyau selon la revendication 1 ou 2, caractérisé en ce que la seconde cavité fermée, remplie de fluide (8) possède une paroi capable d'être déplacée en vue d'établir ladite pression hydrostatique dans le fluide.

4. Raccord de tuyau selon l'une quelconque des revendications 1-3 caractérisé en ce que la seconde cavité (8) est formée d'un trou fileté sur l'autre côté du raccord de tuyau et d'une vis (9) pour s'y visser.

5. Raccord de tuyau selon la revendication 4 caractérisé en ce que les filets du trou fileté présentent une profondeur prédéterminée dans le trou.

6. Raccord de tuyau selon l'une quelconque des revendications 1-5 caractérisé en ce que le fluide est d'un type qui durcit en raison de l'impact de la pression.

7. Raccord de tuyau selon la revendication 1 ou 2 caractérisé en ce que la seconde cavité (8) reçoit une substance d'un type qui peut être activé en vue de se dilater par dilatation chimique, et des moyens pour l'activer en affectant l'autre côté du raccord de tuyau.

8. Procédé pour fixer la paroi (12) de l'extrémité d'un tuyau dans un raccord de tuyau selon l'une des revendications 1-7, ladite extrémité de tuyau étant introduite entre un ergot (1) et un manchon (5) s'étendant radialement à l'extérieur de lui, caractérisé en ce qu'on déforme le diaphragme (7) pour venir en prise fermement avec la paroi (12) de l'extrémité du tuyau de manière que des moyens profilés sur l'ergot (1) ou sur le manchon (5) soient appliqués radialement dans le matériau de la paroi du tuyau, une pression de fluide étant établie dans la cavité (6) sur le côté du diaphragme faisant face à, et éloigné de, la paroi de l'extrémité du tuyau, en établissant une pression hydraulique dans une seconde cavité fermée, remplie de fluide (8), située dans le raccord de tuyau et on maintient la déformation du diaphragme.

9. Procédé selon la revendication 8, caractérisé en ce que l'on déforme plastiquement le diaphragme (7).

10. Procédé selon la revendication 8 caractérisé en ce que l'on déforme élastiquement le diaphragme (7) et l'on maintient la pression du fluide dans la cavité (6).
